# EUROPEAN PATENT SPECIFICATION

(11) **EP 0 722 544 B1**
(45) Date of publication and mention of the grant of the patent: **09.07.1997**
(21) Application number: 94930770.6
(22) Date of filing: 13.10.1994
(51) Int. Cl.: F16F 15/315

(54) **DEVICE FOR DAMPING VIBRATION OF ROTOR**
GERÄT ZUR DÄMPFUNG VON ROTORSCHWINGUNGEN
DISPOSITIF D'AMORTISSEMENT DES VIBRATIONS D'UN ROTOR

(30) Priority: 15.10.1993 JP 258310/93; 16.12.1993 JP 316907/93
(43) Date of publication of application: 24.07.1996
(73) Proprietor: MINNESOTA MINING AND MANUFACTURING COMPANY, St. Paul, Minnesota 55133-3427 (US)
(72) Inventor: OHKUMA, Kiyoshi, Sagamihara-City, Kanagawa Pref. 228 (JP)
(74) Representative: Hilleringmann, Jochen, Dipl.-Ing.
(86) International application number: US9411677
(87) International publication number: WO9510714

(56) References cited:
- EP-A- 0 055 780
- GB-A- 2 172 687
- US-A- 4 236 387
- TECHNISCHE RUNDSCHAU, vol.78, no.18, 1 April 1986, BERN, SWITZERLAND pages 46 - 51 J. WIDMER 'Lagerung hochtouriger Schwunräder aus Verbundwerkstoffen'
- PATENT ABSTRACTS OF JAPAN vol. 5, no. 105 (M-77) (777) 8 July 1981 & JP,A,56 049 440 (MITSUBISHI DENKI K.K.) 6 May 1981

## Description

### Field of the Invention

The present invention relates to a device for damping vibration of a rotor.

### Background of the Invention

A rotor is subjected to a vibration during the rotational movement, derived from a driving source such as motors or due to the unbalance inherent to the rotor itself. It is necessary to mitigate or preferably rapidly damp such vibrations so that the critical speed of the rotary system can be easily passed to minimize the risk of breakage of the system and suppress the unfavorable influence (such as a damage or a noise) on a peripheral structure such as a housing or others.

A vibration damping device is disclosed in, e.g., Japanese Unexamined Patent Publication (Kokai) No. 51-22979, in which a vibration generated during the rotation of a rotor is mitigated. This vibration damping device suppresses a whirling motion of the rotor at the critical speed by a plurality of elastic projections fixed annularly around the rotor. The elastic projections are brought into contact with the surface of the rotor during the whirling motion of the latter and deformed, whereby the amplitude of the whirling motion is reduced. Also, Japanese Unexamined Patent Publication (Kokai) No. 4-50529 discloses a vibration damping structure, in which means for absorbing the vibration such as a visco-elastic material is interposed between a bearing for rotatably supporting the rotor and a member for supporting the bearing.

### Summary of the Invention

According to the structure in which the vibration of the rotor is mitigated by the contact of the rotor with the elastic projections arranged around the rotor, since it is necessary to provide a space for arranging the elastic projections and a support for fixedly supporting the elastic projections, the miniaturization of the peripheral structure around the rotor is prevented. Also, since it is necessary to accurately position the elastic projections so that a predetermined gap is formed between the respective elastic projection and the surface of the rotor, a highly-precision assembly technique is required. In addition, since the elastic projections are slid on the rotor during the whirling motion, the problems of heat generation and wear of elastic projections may arise.

On the other hand, according to the structure in which the bearing is supported via the vibration absorbing means, since the bearing easily vibrates (displaces) in accordance with the vibration of the rotor, there is a risk of the increased vibration of the rotor due to the eccentricity of the shaft. Accordingly, since it is impossible to provide a sufficient gap between the bearing and the bearing support, not only the operation for interposing the vibration absorbing means becomes difficult, but also there may be a possibility that the sufficient vibration suppressing effect is not achievable. Also there is another problem in that the bearing structure must be reinforced such as by increasing the number of bearings, which results in the lowering of the degree of the design freedom.

The present invention is to provide a vibration damping device which is easily assembled and capable of mitigating the vibration of the rotor during the rotation without being brought the rotary part into contact with the stationary part, preventing the miniaturization of the peripheral structure of the rotor and lowering the degree of the design freedom.

To accomplish the above, the present invention provides a device for damping vibration of a rotor, which comprises a first surface element disposed transversely to an axis of a rotor and supported by the rotor, a second surface element axially oppositely spaced from the first surface element and disposed transversely to the axis of the rotor, and a vibration damping member fixedly secured to and held between the first and second surface elements. Such a device is known from GB-A- 2 172 687. The present invention differs therefrom in that said first surface element is supported by the rotor while maintaining a constant crossing angle to the axis of the rotor, said second surface element is disposed transversely to the axis of the rotor at a constant crossing angle thereto, and said vibration damping member is adapted to be deformed in a visco-elastic manner due to a deflection of the axis of the rotor caused between the first and second surface elements.

### Brief Description of the Drawings

FIGURE 1. A side sectional view of a vibration damping device according to a first embodiment of the present invention.

FIGURE 2. An illustration of a modification of support member and vibration damping member in the vibration damping device shown in Figure 1; (a) being a plan view taken along a line II-II of Figure 1; (b) being a plan view of another modification taken along a line II-II of Figure 1; and (c) being a cross-section of the support member according to a further modification.

FIGURE 3. A side sectional view of another application of the vibration damping device of Figure 1; (a) showing a rotor held in a both-sides manner and (b) showing that held in a cantilever manner.

FIGURE 4. A schematic view for explaining the vibration damping action of the vibration damping device of Figure 1; (a) showing the action on a rotor held in a both-sides manner and (b) showing that held in a cantilever manner.

FIGURE 5. A side sectional view of a vibration damping device for a rotor according to a second embodiment of the present invention.

FIGURE 6. A side sectional view of another application of the vibration damping device of Figure 5.

FIGURE 7. A side sectional view of a vibration damping device for a rotor according to a further embodiment of the present invention.

FIGURE 8. A schematic view for explaining the vibration damping action of the vibration damping device of Figure 4; (a) showing the action on a rotor held in a both-sides manner and (b) showing that held in a cantilever manner.

FIGURE 9. A side sectional view of a vibration damping device for a rotor according to a fourth embodiment of the present invention.

FIGURE 10. A side sectional view of another application of the vibration damping device of Figure 9; (a) showing the action on a rotor held in a both-sides manner and (b) showing that held in a cantilever manner.

### Reference Numeral Explanations

10, 30, 44, 46 = vibration damping device
12 = main mass
12a, 12b, 18a, 26a, 40a, 48a = axial end surface
14, 14' = shaft
16, 32 = bearing
18 = stationary frame
20, 34, 48 = support member
22, 36, 50 = vibration damping member
24, 38 = sleeve
26, 40 = flange
29, 60 = end plate
42 = rod member

### Detailed Description of the Invention

Preferably, the first surface element always crosses at a right angle to the axis of the rotor. According to the preferred embodiment, the vibration damping device is applied to a rotor having a main mass and a shaft coaxially fixed to the main mass, wherein the first surface element comprises an axial end surface of a support member connected to the shaft, the second surface element comprises an axial end surface of the main mass, and the vibration damping member is held between the support member and the main mass so as to rotate with the rotor. In this case, the support member may comprise an annular element fixedly secured to and surrounding the shaft of the rotor. The support member also may comprise a plurality of parts separated by planes axially extending through a central hole of the annular element. The annular element may comprise a sleeve for accommodating the shaft of the rotor and a flange radially outwardly extending from the sleeve. The support member also may comprise a flange integrally connected to and radially extending from the shaft of the rotor. The vibration damping member may comprise an annular visco-elastic layer encircling the shaft of the rotor. Further, it is preferred that a stationary frame supports each of shafts projecting from the axial end surfaces of the main mass of the rotor, and that the support member is arranged opposite to each of the axial end surfaces of the main mass.

According to another preferred embodiment, the first surface element comprises an axial end surface of a support member connected to the rotor in a mutually rotatable manner, the second surface element comprises an axial end surface of a stationary frame rotatably supporting the rotor, and the vibration damping member is fixedly held between the support member and the stationary frame. When the vibration damping device is applied to a rotor having a main mass and a shaft coaxially fixed to the main mass, the stationary frame may support the shaft, and the support member may comprise an annular element connected to the shaft in a mutually rotatable manner around the shaft. In this case, it is preferred that the stationary frame supports each of the shafts projecting from the axial end surfaces of the main mass of the rotor, and that the support member is arranged on each of the shafts. When the vibration damping device is applied to a rotor formed from a rod member, the stationary frame may support the rod member, and the support member may comprise an annular member connected to the rod member in a mutually rotatable manner around the rod member. In this case, it is preferred that the stationary frame supports the rotor at two positions axially spaced from each other, and that the support member is arranged near or at each of the two positions on the rotor. In either case, the support member may comprise a plurality of parts separated by planes axially extending through a central hole of the annular element. Further, the vibration damping member may comprise an annular visco-elastic layer arranged in such a manner as being not in contact with the rotor.

According to further preferred embodiment, a vibration damping device is applied to a rotor comprising a main mass and a shaft coaxially fixed to the main mass, wherein the first surface element comprises axial end surfaces of a plurality of support members connected to the shaft, the second surface element comprises an axial end surface of a stationary frame rotatably supporting the shaft and an axial end surface of the main mass, and the vibration damping member comprises one which is fixedly held between the supporting member and the stationary frame and another which is held between the supporting member and the main mass so as to rotate with the rotor.

When the vibration generates during the rotation of the rotor, the first surface element displaces together with the rotor while maintaining the crossing angle with the rotor axis at a constant value. Also, when the rotor displaces due to the deflection of the rotor axis between the first and second surface elements, the relative positional relationship varies between he first and second surface elements. At that time, the vibration damping member fixed to the respective surface element deforms in a visco-elastic manner. Consequently, the vibration energy is partially converted to the visco-elastic deformation to mitigate and rapidly damp the vibration.

The present invention will be described in more detail below with reference to the attached drawings illustrating the preferred embodiments. In the drawings, the same reference numerals are used for designating the same or similar components in the respective drawings.

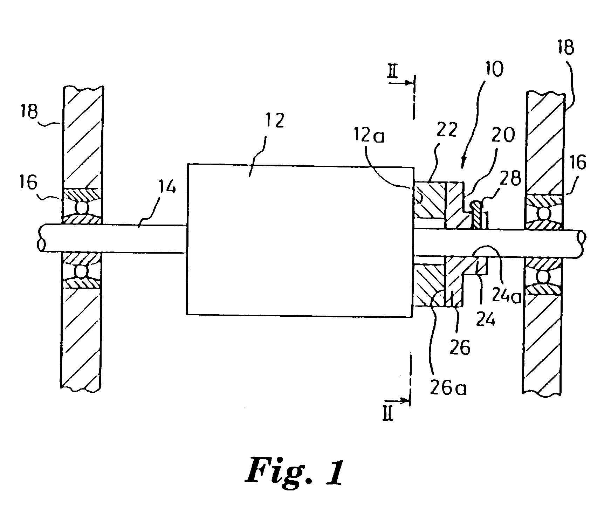

Fig. 1 shows a vibration damping device 10 according to one preferred embodiment of the present invention. In this embodiment, the vibration damping device 10 is applied to a rotor consisting of a cylindrical main mass 12 and a shaft 14 coaxially fixed to the main mass 12. The shaft 14 of the rotor is rotatably supported by a stationary frame 18 through bearings 16 on the axially opposite sides of the main mass 12.

The vibration damping device 10 is provided with a support member 20 fixedly secured to the shaft 14 and a vibration damping member 22 nipped between the main mass 12 and the support member 20. The support member 20 is an annular element provided with a tubular sleeve 24 and a plate-like flange 26, radially extending from the center of the sleeve 24, which is mounted onto the shaft 14 by inserting the shaft 14 into a central hole 24a of the sleeve 24. The sleeve 24 is coaxially secured to the shaft 14 preferably by an interference fit or a set screw 28. The flange 26 is preferably molded integrally with the sleeve 24 but may be connected therewith by other means such as welding or adhesive. When the support member 20 is fixed to the shaft 14, one axial end surface 26a of the flange 26 is positioned generally perpendicular to an axis of the shaft 14. In this regard, the axial end surface 26a of the support member 20 constitutes a first surface element of the present invention.

The vibration damping member 22 is fixedly secured to one axial end surface 12a of the main mass 12 of the rotor and the axial end surface 26a of the flange 26 of the support member 20, respectively. The axial end surface 12a of the main mass 12 constitutes a second surface element always positioned generally perpendicular to the axis of the shaft 14. Accordingly, the vibration damping member 22 rotates together with the rotor during the rotation of the latter. In this regard, since the support member 20 is fixedly secured to the main mass 12 of the rotor via the vibration damping member 22, the former may not be always fixed to the shaft 14 as described before. However, if it is not fixed, it is necessary for excluding a gap between the inner surface of the sleeve 24 and the outer surface of the shaft 14 to ensure the vibration damping action of the support member 20 and the vibration damping member 22 as described later.

The vibration damping member 22 is made by a visco-elastic polymer disclosed, for example, in Japanese Unexamined Patent Publication 59-38053 or a visco-elastic material forming a foamed pressure-sensitive adhesive disclosed, for example, in Japanese Unexamined Patent Publication 57-17030. The visco-elastic material forming the vibration damping member 22 is preferably has a self-adhesive for enhancing the bonding operation with the main mass 12 of the rotor and the support member 20. However, it may be favorable to use a relatively hard visco-elastic material having no self-adhesive and bond the same with a further adhesive or heat to the main mass 12 and the support member 20, if used under the high temperature condition.

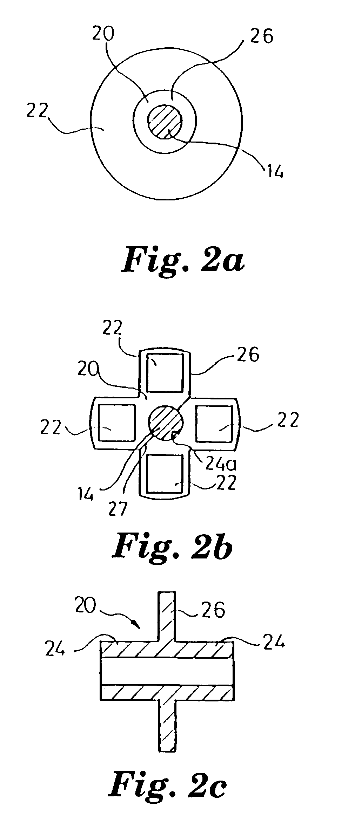

As illustrated in Fig. 2 the support member 20 and the vibration damping member 22 may have various shapes. In general, as shown in Fig. 2(a), the support member 20 having an annular flange 26 and the vibration damping member 22 consisting of an annular visco-elastic layer are used. However, as shown in Fig. 2(b), it may be possible to use the support member 20 having a cross-shaped flange 26 and the vibration damping members 22 arranged in the respective sections of the flange 26. As shown in Fig. 2(c), the sleeve 24 of the support member 20 may be extended from the opposite axial end surfaces of the flange 26. According such a structure, it is possible to obtain a sufficient axial length of the sleeve 24 for firmly securing the support member 20 to the shaft 12. In this regard, a thickness (a length in the axial direction) of the vibration damping member 22 is within a range of 0.5 mm through 50 mm for ensuring the sufficient vibration damping effect due to the visco-elastic deformation and avoiding the deformation from occurring due to its own weight.

It is necessary for the sleeve 24 of the support member 20 to have a sufficient axial length to maintain during the rotation of the rotor a generally vertically-crossing arrangement of the axial end surface 26a of the support member 20 to the axis of the shaft 14. The axial length of the sleeve 24 is preferably within a range of 0.2 cm through 100 cm on the view point of the operatability. In this regard, if the support member 20 is secured to the shaft 14 by an interference fit, it is possible to exclude the sleeve 24 and constitute the support member 20 solely by a flange 26 having the axial length (thickness) as defined above. Further, the supporting member 20 is preferably divided into two sections by a plane 27 extending in the axial direction through a central hole 24a of the sleeve 24 as shown in Fig. 2(b). According to this structure, it is possible to ease the detachment/attachment of the support member relative to the shaft 14, so that the vibration damping member 22 is replaceable without removing the shaft 14 from the stationary frame 18, for example, when the vibration damping member 22 is deteriorated. In this case, the divided sections are bonded with each other by an adhesive or the like.

The support member 20 may be made of various materials having a mechanical strength not easily deformable, such as iron, copper, aluminum, stainless steel, zinc, ceramic, fiber-reinforced glass, ABS resin, acrylic resin or polycarbonate resin. Of them, stainless steel is particularly favorable on the view point of its excellent corrosion resistance and mechanical strength. Also the support member 20 may be manufactured by a casting process such as molding or die-casting, or by a pressing process such as punching. If the support member 20 is molded by resinous material, the injection molding is preferably used.

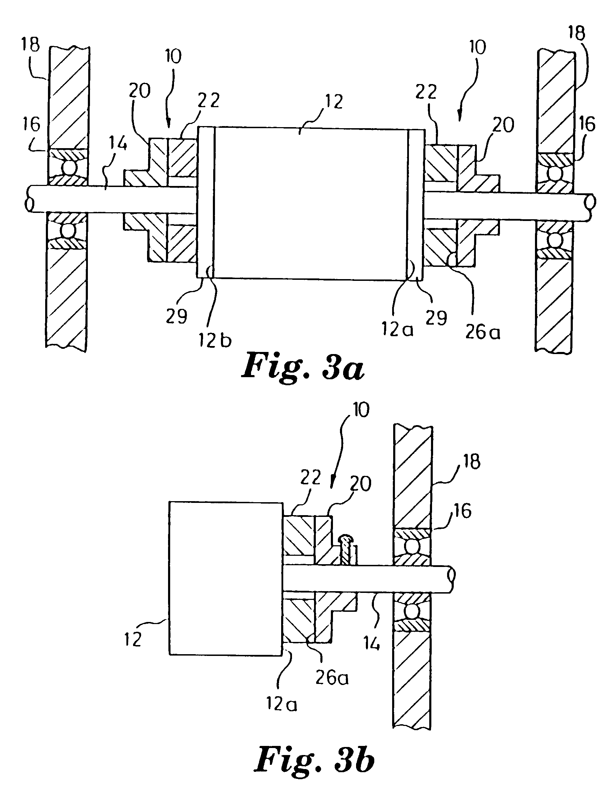

Fig. 3 shows another application of the vibration damping device in Fig. 1. As shown in Fig. 3(a), it is possible to arrange a pair of vibration damping devices 10 on the opposite axial end surfaces 12a and 12b of a main mass 12 supported on the opposite sides thereof via a shaft 14. In this application, an annular end plate 29 made of metal, ABS resin, acrylic resin or others is fixed onto the respective axial end surface 12a, 12b of the main mass 12 of the rotor, and a vibration damping member 22 is fixed to the respective end plate 29. According to such a structure, it is possible to assuredly retain the vibration damping member 22 between the main mass 12 and the support member 20 even if the main mass 12 is made of material having no compatibility with adhesive. In this regard, the respective end plate 29 is generally fixed to the axial end surface 12a, 12b by a screw (not shown) but may be fixed by other means such as welding or adhesive. According to this application, the vibration damping effect is apparently more improved than the case when the structure shown in Fig. 1 is used, if the conditions are identical, such as dimensions of the support member 20 and the vibration damping member 22. Also as shown in Fig. 3(b), it is possible to arrange a vibration damping device 10 on an axial end surface 12a of a main mass 12 held in a cantilever manner by a shaft 14.

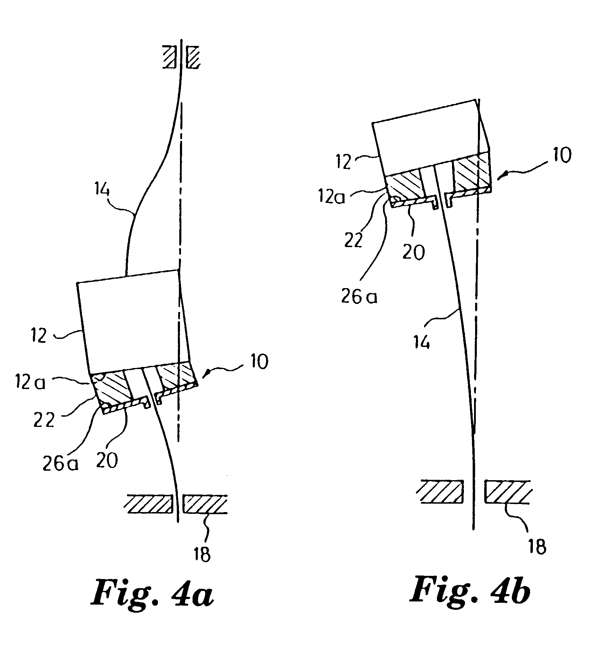

The operation of the vibration damping device 10 will be explained with reference to Fig. 4 If there is a mass-unbalance, for example, in the main mass 12 during the rotation of the rotor, the shaft 14 deflects as illustrated, whereby the axes of the main mass 12 and the shaft 14 displace to cause the whirling motion of the rotor. At that time, the support member 20 fixedly connected to the shaft 14 displaces together with the shaft 14 while maintaining the coaxial state with the shaft 14 due to the action of the sleeve 24, whereby the axial end surface 26a of the flange 26 of the support member 20 is kept while being generally perpendicular to the axis of the shaft 14. On the other hand, since the axial end surface 12a of the main mass 12 of the rotor is always arranged while being generally perpendicular to the axis of the shaft 14, the shaft 14 must bend between both the axial end surfaces 12a and 26a, whereby the positional relationship between both the axial end surfaces 12a, 26a is changed from the parallel arrangement to the transverse arrangement. Consequently, compression, tension and shearing force are applied to the vibration damping member 22 nipped between both the axial end surfaces 12a, 26a to cause the same to deform in a visco-elastic manner (see Fig. 4 (a)). Particularly, an energy due to whirling motion of the rotor which becomes maximum in a critical speed zone is converted to an energy causing the deformation of the vibration damping member 22, whereby the amplitude of the whirling motion is minimized. Also, vibration transmitted from the driving source to the main mass 12 via the shaft 14 and that transmitted from the main mass 12 to the stationary frame 18 via the shaft 14 are mitigated by a similar action and rapidly damped.

Such vibration damping action of the vibration damping device 10 is also true to the embodiments shown in Figs. 3(a) and 3(b). Particularly when the vibration damping device 10 is applied to the rotor shown in Fig. 3(b) supported in a cantilever manner, the direction of deformation of the vibration damping member 22 is different from that shown in Fig. 4(a), as shown in Fig. 4(b). However, even in either cases, since the vibration damping device 10 is located closely adjacent to the axial end surface of the rotor, it is unnecessary to increase an installation space or supports therefor, whereby the miniaturization of the peripheral structure is not disturbed. In this regard, to create the above action, the axial end surface 26a of the flange 26 of the support member 20 is not necessarily positioned perpendicular to the axis of the shaft 14 but may be maintained at a predetermined angle thereto.

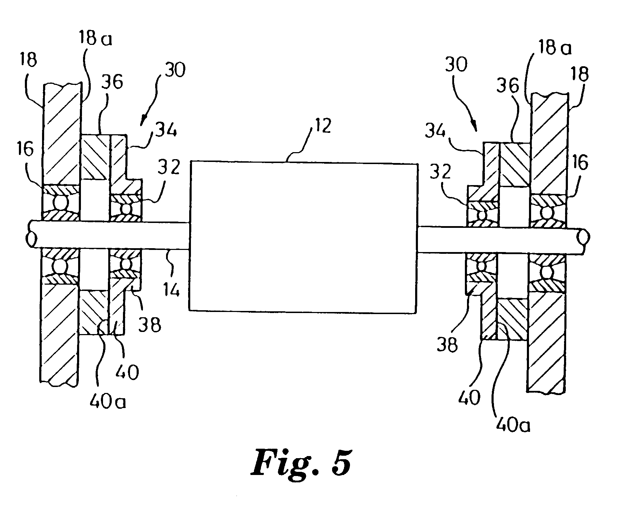

Fig. 5 illustrates a vibration damping device 30 according to another embodiment of the present invention. The vibration damping device 30 is provided with a pair of support members 34, each connected to a rotor shaft 14 via a bearing 32 for allowing the relative rotation thereto and a pair of vibration damping members 36, each nipped between a stationary frame 18 and the support member 34. The support member 34 is an annular element similar to the support member 20 shown in Fig. 1, having a sleeve 38 and a flange 40, in which the sleeve 38 is coaxially fixed to the outer retainer of the bearing 32. When the support member 34 is secured to the shaft 14, one axial end surface 40a of the flange 40 is positioned generally perpendicular to an axis of the shaft 14. In this regard, the axial end surface 40a of the support member 34 constitutes a first surface element of the present invention.

The vibration damping member 36 is fixedly secured, respectively, to one axial end surface 18a of the stationary frame 18 and to the axial end surface 40a of the flange 40 of the support member 34 arranged opposite and parallel to the former axial end surface 18a while being apart from at a distance therebetween. The axial end surface 18a of the stationary frame 18 constitutes a second surface element positioned always generally perpendicular to the axis of the shaft 14. Accordingly, the vibration damping member 36 is fixedly held between the stationary frame 18 and the support member 34 even when the rotor is rotated.

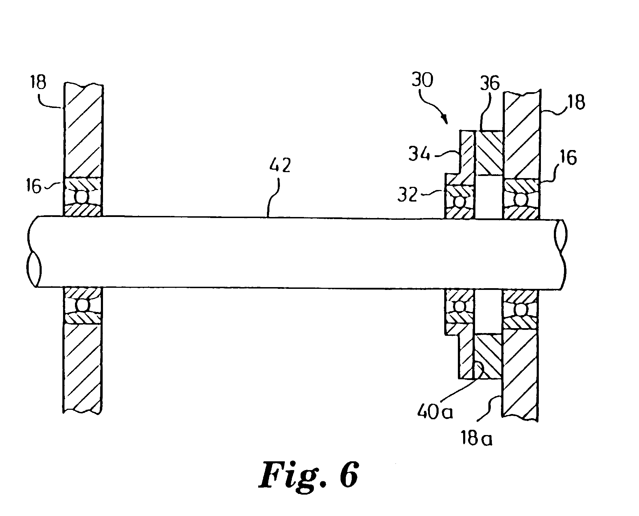

Similar to the vibration damping device 10 shown in Fig. 1, the vibration damping device 30 damps a vibration or a whirling motion generated during the rotation of the rotor by a visco-elastic deformation of the vibration damping member 36 nipped between the stationary frame 18 and the support member 34 displaceable together with the rotor shaft 14. While the vibration damping devices 30 are arranged at both of the supported ends of the rotor where the rotor is held on the stationary frame 18 in a both-sides manner via the shaft 14 in Fig. 5, it is of course possible to arrange the vibration damping device 30 at only one supported end. Also it is applicable to a rotor held in a cantilever manner. As shown in Fig. 6, the vibration damping device 30 is applicable to a rotor 42 consisting of a rod member having a constant cross-section. In either cases, since the vibration damping device 30 is arranged closely adjacent to the stationary frame 18 rotatably held the rotor, it is unnecessary to increase an installation space or supports therefor, whereby the miniaturization of the peripheral structure is not disturbed.

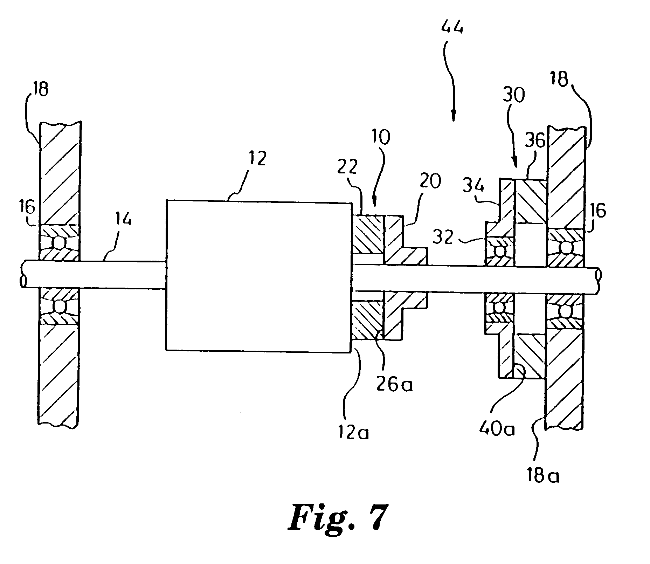

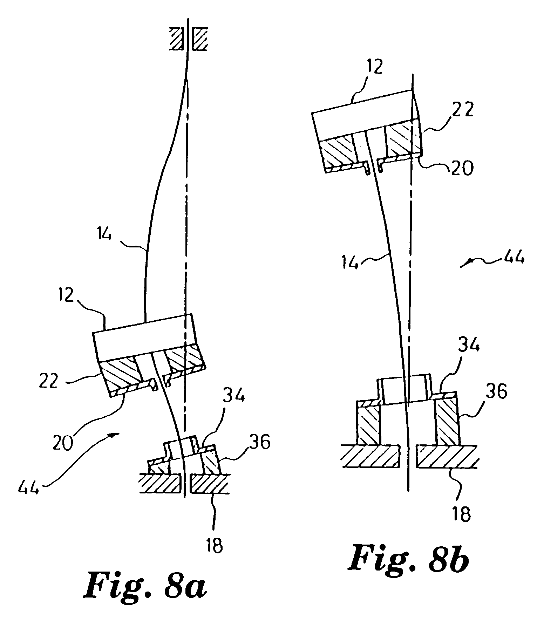

Fig. 7 illustrates a vibration damping device 44 according to a further embodiment of the present invention. This vibration damping device 44 is a combination of the vibration damping device 10 shown in Fig. 1 and that 30 shown in Fig. 5. The vibration damping device 44 can damp a vibration or a whirling motion generated during the rotation of the rotor by individual actions derived from the respective vibration damping devices 10 and 30 as described before. Fig. 8 is similar to Fig. 4, wherein Fig. 8(a) illustrates the vibration damping action of the vibration damping device 44 when applied in a manner as shown in Fig. 7, while Fig. 8(b) illustrates when applied in a cantilever manner.

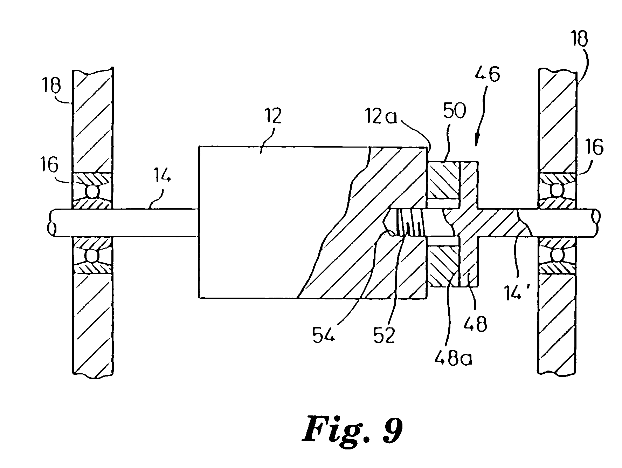

Fig. 9 illustrates a vibration damping device 46 according to a fourth embodiment of the present invention. The vibration damping device 46 is provided with a support member 48 formed integrally with a rotor shaft 14' and a vibration damping member 50 nipped between a main mass 12 of a rotor and the support member 48. The support member 48 consists of a plate-like flange extended in the radial direction and integrally connected with the rotor shaft 14'. One axial end surface 48a of the support member 48 is positioned generally perpendicular to the shaft 14' and constitutes a first surface element of the present invention.

The shaft 14' provided integrally with the support member 48 is fixedly secured to the main mass 12 while an axis thereof is positioned generally perpendicular to an axial end surface 12a of the main mass 12 constituting a second surface element. The vibration damping member 50 is fixedly secured to the axial end surface 12a of the main mass 12 and the axial end surface 48a of the support member 48 and rotatable together with the rotor. The shaft 14' is fixed to the main mass 12, for example, by screw-engaging a threaded portion 52 thereof with a threaded hole 54 formed on the axial end surface 12a of the main mass 12, as illustrated. Alternatively, the shaft 14' may be fixed to the main mass 12 by other means such as welding or adhesive (see Fig. 10(b)). While the support member 48 is preferably formed together with shaft 14', it is possible to prepare the shaft 14' and the support member 48 as separate pieces and bond the two with each other by means of welding or adhesive.

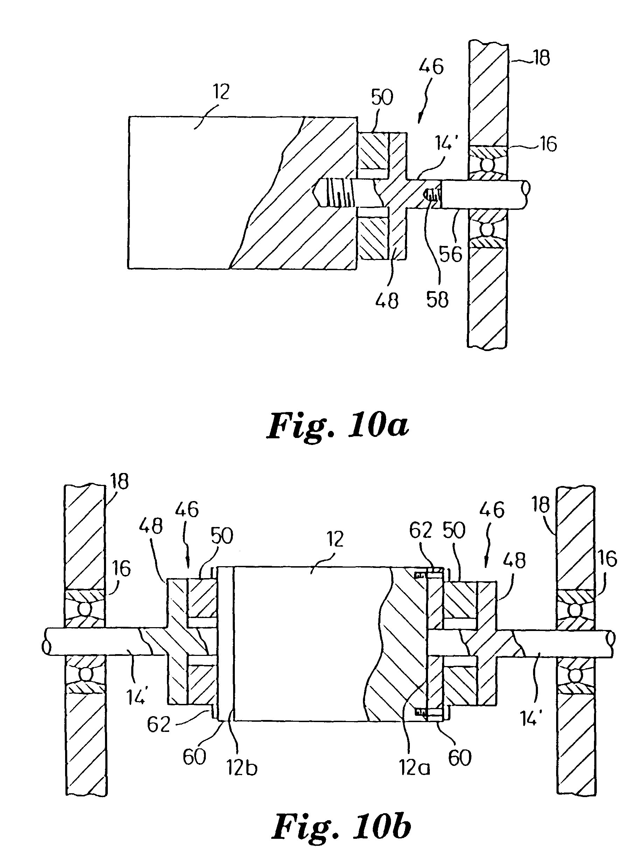

The vibration damping device 46 can damp a vibration or a whirling motion generated during the rotation of the rotor in a similar manner as the vibration damping device 10 of Fig. 1, due to the visco-elastic deformation of the vibration damping member 50. In this case, since the support member 48 is formed integrally with the rotor shaft 14', the deflection of the rotor axis can be accurately transmitted to the support member 48. In this regard, while Fig. 9 shows that the vibration damping device 46 is arranged solely on one axial end surface of the rotor held on the stationary frame 18 in a both-sides manner via the shafts 14 and 14', it is of course possible to arrange the vibration damping devices 46 on both of the axial end surfaces (see Fig. 10(b)), or to apply this to a rotor held in a cantilever manner (see Fig. 10(a)).

Also as shown in Fig. 10(a), the vibration damping device 46 may have an extension 56 connected with the shaft 14'. The extension 56 in this case may be fixed to the shaft 14' by means of a threaded portion 58 as illustrated or welding or adhesive. Further, as shown in Fig. 10(b), an annular end plate 60 made, for example, of metal, ABS resin or acrylic resin may be fixed onto the respective axial end surface 12a, 12b and the vibration damping member 50 is fixed onto the respective end plate 60. Thereby it is possible to firmly secure the vibration damping member 50 between the main mass 12 and the support member 48. In this regard, the end plate 60 may be fixed to the respective axial end surface 12a, 12b of the main mass 12, for example, by screws 62, welding or adhesive. Although the shaft 14' and the end plate 60 are preferably bonded with each other by welding, adhesive or others, it is unnecessary to always bonding the shaft 14' with the end plate 60, provided the shaft 14' is fixedly connected to the main mass 12. Several embodiments of the present invention have been described above, there are various selections of shapes and materials of the components such as support member in the respective embodiments as described with reference to the first embodiment.

As is apparent from the above description, according to the present invention, since the problems derived from the slide contact between the rotary part and the stationary part are excluded and there is no need for increasing the installation space and/or supports for providing the vibration damping device, it is possible to provide an easily-assembled vibration damping device without disturbing the miniaturization and lowering the degree of design freedom of the peripheral structure of the rotor. According to this vibration damping device, it is possible to effectively damp the vibration generated during the rotation of rotor by absorbing the vibration energy due to the visco-elastic deformation of the vibration damping member.

## Claims

1. A device for damping vibration of a rotor, comprising:
a first surface element (26a;40a;48a) disposed transversely to an axis (14;14') of a rotor (12) and supported by the rotor (12) while maintaining a constant crossing angle to the axis (14;14') of the rotor (12),
a second surface element (12a;18a) axially oppositely spaced from the first surface element (26a;40a;48a) and disposed transversely to the axis (14,14') of the rotor (12) at a constant crossing angle thereto, and
a vibration damping member (22;36;50) fixedly secured to and held between the first and second surface elements (26a;40a;48a;12a;18a), and adapted to be deformed in a visco-elastic manner due to a deflection of the axis of the rotor (14,14') caused between the first and second surface elements (26a;40a;48a;12a;18a).

2. A device for damping vibration as defined by claim 1, wherein the first surface element (26a;40a;48a) always crosses at a right angle to the axis (14;14') of the rotor (12).

3. A device for damping vibration as defined by claim 1 or 2 which is applied to a rotor having a main mass (12) and a shaft (14;14') coaxially fixed to the main mass (12), wherein the first surface element comprises an axial end surface (26a;48a) of a support member (20;48) connected to the shaft (14;14'), the second surface element comprises an axial end surface (12a) of the main mass (12), and the vibration damping member (22;50) is held between the support member (20;48) and the main mass (12) so as to rotate with the rotor.

4. A device for damping vibration as defined by claim 3, wherein the support member (20;48) comprises an annular element (24) fixedly secured to and surrounding the shaft (14;14') of the rotor.

5. A device for damping vibration as defined by claim 4, wherein the support member (20;48) comprises a plurality of parts separated by planes axially extending through a central hole of the annular element (24).

6. A device for damping vibration as defined by claim 4 or 5, wherein the annular element comprises a sleeve (24) accommodating the shaft (14;14') of the rotor (12) and a flange (26) radially outwardly extending from the sleeve (24).

7. A device for damping vibration as defined by claim 3, wherein the support member (48) comprises a flange integrally connected to and radially extending from the shaft (14') of the rotor (12).

8. A device for damping vibration as defined by any one of claim 4 through 7, wherein the vibration damping member (22;50) comprises an annular visco-elastic layer encircling the shaft (14;14') of the rotor (12).

9. A device for damping vibration as defined by any one of claims 3 through 8, wherein a stationary frame supports each of the shafts (14;14') projecting from the axial end surfaces (12a) of the main mass (12) of the rotor, and the support member (20;48) is arranged opposite to each of the axial end surfaces (12a) of the main mass (12).

10. A device for damping vibration as defined by claim 1 or 2, wherein the first surface element comprises an axial end surface (14a) of a support member (34) connected to the rotorb (12) in a mutually rotatable manner, the second surface element comprises an axial end surface (18a) of a stationary frame (18) rotatably supporting the rotor (12), and the vibration damping member (26) is fixedly held between the support member (34) and the stationary frame (18).

11. A device for damping vibration as defined by claim 10, which is applied to a rotor having a main mass (12) and a shaft (14) coaxially fixed to the main mass (12), wherein the stationary frame (18) supports the shaft (14), and the support member (34) comprises an annular element (38) connected to the shaft (14) in a mutually rotatable manner around the shaft (14).

12. A device for damping vibration as defined by claim 11, the stationary frame (18) supports each of the shafts (14) projecting from the axial end surfaces (18a) of the main mass (12) of the rotor, and the support member (34) is arranged on each of the shafts (14).

13. A device for damping vibration as defined by claim 10, which is applied to a rotor formed from a rod member (42), wherein the stationary frame (18) supports the rod member (42), and the support member (34) comprises an annular member (34) connected to the rod member (42) in a mutually rotatable manner around the rod member (42).

14. A device for damping vibration as defined by claim 13, wherein the stationary frame (18) supports the rotor at two positions axially spaced from each other, and the support member (34) is arranged near each of the two positions on the rotor.

15. A device for damping vibration as defined by any one of claims 11 through 14, wherein the support member (34) comprises a plurality of parts separated by planes axially extending through a central hole of the annular element.

## Patentansprüche

1. Vorrichtung zum Dämpfen der Schwingung eines Rotors, mit:
einem ersten Flächenelement (26a; 40a; 48a), das quer zu einer Achse (14; 14') eines Rotors (12) angeordnet und durch den Rotor (12) abgestützt ist, wobei ein konstanter Kreuzungswinkel zu der Achse (14; 14') des Rotors (12) beibehalten wird,
einem zweiten Flächenelement (12a; 18a), das dem ersten Flächenelement (26a; 40a; 48a) axial gegenüber mit Abstand von diesem und quer zu der Achse (14; 14') des Rotors (12) unter einem konstanten Kreuzungswinkel zu dieser angeordnet ist, und
einem Schwingungsdämpfungsteil (22; 36; 50), das fest an dem ersten und dem zweiten Flächenelement (26a; 40a; 48; 12a; 18a) angebracht und zwischen diesen gehalten und derart ausgebildet ist, daß es aufgrund einer Biegung der Achse (14; 14') des Rotors, die zwischen dem ersten und dem zweiten Flächenelement (26a; 40a; 48a; 12a; 18a) verursacht wird, viskoelastisch verformt werden kann.

2. Vorrichtung zum Dämpfen von Schwingung nach Anspruch 1, bei der das erste Flächenelement (26a; 40a; 48a) die Achse (14; 14') des Rotors (12) stets rechtwinklig kreuzt.

3. Vorrichtung zum Dämpfen von Schwingung nach Anspruch 1 oder 2, die bei einem Rotor angewandt wied, welcher eine Hauptmasse (12) und eine koaxial an der Hauptmasse (12) befestigte Welle (14; 14') aufweist, wobei das erste Flächenelement eine axiale Stirnfläche (26a; 48a) eines mit der Welle (14; 14') verbundenen Stützteils (20; 48) aufweist, das zweite Flächenelement eine axiale Stirnfläche (12a) der Hauptmasse (12) aufweist, und das Schwingungsdämpfungsteil (22; 50) zwischen dem Stützteil (20; 48) und der Hauptmasse (12) derart gehalten ist, daß es sich mit dem Rotor dreht.

4. Vorrichtung zum Dämpfen von Schwingung nach Anspruch 3, bei der das Stützteil (20; 48) ein Ringelement (24) aufweist, das an der Welle (14: 14') des Rotors fest angebracht ist und diese umgibt.

5. Vorrichtung zum Dämpfen von Schwingung nach Anspruch 4, bei der das Stützteil (20; 48) eine Vielzahl von Teilen aufweist, die durch axial durch ein mittiges Loch des Ringelements (24) verlaufende Ebenen voneinander getrennt sind.

6. Vorrichtung zum Dämpfen von Schwingung nach Anspruch 4 oder 5, bei der das Ringelement eine Hülse (24), die die Welle (14; 14') des Rotors (12) aufnimmt, und einen von der Hülse (24) radial nach außen abstehenden Flansch (26) aufweist.

7. Vorrichtung zum Dämpfen von Schwingung nach Anspruch 3, bei der das Stützteil (48) einen Flansch aufweist, der einstückig mit der Welle (14') des Rotors (12) verbunden ist und radial davon absteht.

8. Vorrichtung zum Dämpfen von Schwingung nach einem der Ansprüche 4 bis 7, bei der das Schwingungsdämpfungsteil (22; 50) eine die Welle (14; 14') des Rotors (12) umgebende ringförmige viskoelastische Schicht aufweist.

9. Vorrichtung zum Dämpfen von Schwingung nach einem der Ansprüche 3 bis 8, bei der ein stationärer Rahmen jede der aus den axialen Stirnflächen (12a) der Hauptmasse (12) des Rotors herausragenden Wellen (14;14') abstützt und das Stützteil (20; 48) gegenüber jeder der axialen Stirnflächen (12a) des Rotors (12) angeordnet ist.

10. Vorrichtung zum Dämpfen von Schwingung nach Anspruch 1 oder 2, bei der das erste Flächenelement eine axiale Stirnfläche (14a) eines Stützteils (34) aufweist, das relativ zu dem Rotor (12) drehbar mit diesem verbunden ist, das zweite Flächenelement eine axiale Stirnfläche (18a) eines stationären Rahmens (18) aufweist, der den Rotor (12) drehbar abstützt, und das Schwingungsdämpfungsteil (26) zwischen dem Stützteil (34) und dem stationären Rahmen (18) fest gehalten ist.

11. Vorrichtung zum Dämpfen von Schwingung nach Anspruch 10, die bei einem Rotor angewandt wird, der eine Hauptmasse (12) und eine koaxial an der Hauptmasse (12) befestigte Welle (14) aufweist, wobei der stationäre Rahmen (18) die Welle (14) abstützt und das Stützteil (34) ein Ringelement (38) aufweist, das mit der Welle (14) um diese und relativ zu ihr drehbar verbunden ist.

12. Vorrichtung zum Dämpfen von Schwingung nach Anspruch 11, bei der der stationäre Rahmen (18) jede der aus den axialen Stirnflächen (18a) der Hauptmasse (12) des Rotors herausragenden Wellen (14) abstützt und das Stützteil (34) an jeder der Wellen (14) angeordnet ist.

13. Vorrichtung zum Dämpfen von Schwingung nach Anspruch 10, die bei einem aus einem Stabteil (42) gebildeten Rotor angewandt wird, wobei der stationäre Rahmen (18) das Stabteil (42) abstützt und das Stützteil (34) ein Ringteil (34) aufweist, das um das Stabteil (42) und relativ zu diesem drehbar mit diesem verbunden ist.

14. Vorrichtung zum Dämpfen von Schwingung nach Anspruch 13, bei der der stationäre Rahmen (18) den Rotor an zwei axial voneinander beabstandeten Positionen abstützt und das Stützteil (34) in der Nähe jeder der beiden Positionen an dem Rotor angeordnet ist.

15. Vorrichtung zum Dämpfen von Schwingung nach einem der Ansprüche 11 bis 14, bei der das Stützteil (34) eine Vielzahl von Teilen aufweist, die durch axial durch ein mittiges Loch des Ringelementes verlaufende Ebenen voneinander getrennt sind.

## Revendications

1. Dispositif d'amortissement de vibration d'un rotor, comprenant :
un premier élément de surface (26a ; 40a ; 48a) disposé transversalement à un axe (14 ; 14') d'un rotor (12) et supporté par le rotor (12) tout en maintenant un angle de croisement constant par rapport à l'axe (14 ; 14') du rotor (12) ;
un second élément de surface (12a ; 18a) espacé du premier élément de surface (26a ; 40a ; 48a) de façon opposée axialement et disposé transversalement à l'axe (14 ; 14') du rotor (12) selon un angle de croisement constant par rapport à celui-ci ; et
un élément d'amortissement de vibration (22 ; 36 ; 50) fixé de façon rigide aux premier et second éléments de surface (26a ; 40a ; 48a ; 12a ; ;18a), supporté entre ceux-ci et adapté pour être déformé d'une manière visco-élastique du fait d'une déviation de l'axe (14 ; 14') de rotor générée entre les premier et second éléments de surface (26a ; 40a ; 48a ; 12a ; 18a).

2. Dispositif d'amortissement de vibration selon la revendication 1, dans lequel le premier élément de surface (12a ; 40a ; 48a) croise toujours à angle droit l'axe (14 ; 14') du rotor (12).

3. Dispositif d'amortissement de vibration selon la revendication 1 ou 2, qui est appliqué à un rotor comportant une masse principale (12) et un arbre (14 ; 14') fixé coaxialement à la masse principale (12), dans lequel le premier élément de surface comprend une surface d'extrémité axiale (26a ; 48a) d'un élément de support (20 ; 48) connecté à l'arbre (14 ; 14'), le second élément de surface comprend une surface d'extrémité axiale (12a) de la masse principale (12) et l'élément d'amortissement de vibration (22 ; 50) est supporté entre l'élément de support (20 ; 48) et la masse principale (12) de manière à tourner avec le rotor.

4. Dispositif d'amortissement de vibration selon la revendication 3, dans lequel l'élément de support (20 ; 48) comprend un élément annulaire (24) fixé de façon rigide à l'arbre (14 ; 14') du rotor et entourant celui-ci.

5. Dispositif d'amortissement de vibration selon la revendication 4, dans lequel l'élément de support (20 ; 48) comprend une pluralité de parties séparées par des plans s'étendant axialement au travers d'un trou central de l'élément annulaire (24).

6. Dispositif d'amortissement de vibration selon la revendication 4 ou 5, dans lequel l'élément annulaire comprend une gaine (24) recevant l'arbre (14 ; 14') du rotor (12) et un flanc (26) s'étendant vers l'extérieur radialement depuis la gaine (24).

7. Dispositif d'amortissement de vibration selon la revendication 3, dans lequel l'élément de support (48) comprend un flanc connecté d'un seul tenant à l'arbre (14') du rotor (12) et s'étendant radialement depuis celui-ci.

8. Dispositif d'amortissement de vibration selon l'une quelconque des revendications 4 à 7, dans lequel l'élément d'amortissement de vibration (22 ; 50) comprend une couche visco-élastique annulaire encerclant l'arbre (14 ; 14') du rotor (12).

9. Dispositif d'amortissement de vibration selon l'une quelconque des revendications 3 à 8, dans lequel un châssis stationnaire supporte chacun des arbres (14 ; 14') se projetant depuis les surfaces d'extrémité axiale (12a) de la masse principale (12) du rotor et l'élément de support (20 ; 48) est agencé à l'opposé de chacune des surfaces d'extrémité axiale (12a) de la masse principale (12).

10. Dispositif d'amortissement de vibration selon la revendication 1 ou 2, dans lequel le premier élément de surface comprend une surface d'extrémité axiale (14a) d'un élément de support (34) connecté au rotor (12) de manière à réaliser une rotation mutuelle, le second élément de surface comprend une surface d'extrémité axiale (18a) d'un châssis stationnaire (18) supportant à rotation le rotor (12) et l'élément d'amortissement de vibration (26) est supporté de façon rigide entre l'élément de support (34) et le châssis stationnaire (18).

11. Dispositif d'amortissement de vibration selon la revendication 10, qui est appliqué à un rotor comportant une masse principale (12) et un arbre (14) fixé coaxialement à la masse principale (12), dans lequel le châssis stationnaire (18) supporte l'arbre (14), et l'élément de support (34) comprend un élément annulaire (38) connecté à l'arbre (14) de manière à réaliser une rotation mutuelle autour de l'arbre (14).

12. Dispositif d'amortissement de vibration selon la revendication 11, dans lequel le châssis stationnaire (18) supporte chacun des arbres (14) se projetant depuis les surfaces d'extrémité axiale (18a) de la masse principale (12) du rotor et l'élément de support (34) est agencé sur chacun des arbres (14).

13. Dispositif d'amortissement de vibration selon la revendication 10, qui est appliqué à un rotor formé à partir d'un élément de tige (42), dans lequel le châssis stationnaire (18) supporte l'élément de tige (42) et l'élément de support (34) comprend un élément annulaire (34) connecté à l'élément de tige (42) de manière à réaliser une rotation mutuelle autour de l'élément de tige (42).

14. Dispositif d'amortissement de vibration selon la revendication 13, dans lequel le châssis stationnaire (18) supporte le rotor en deux positions espacées axialement l'une de l'autre et l'élément de support (34) est agencé à proximité de chacune des deux positions sur le rotor.

15. Dispositif d'amortissement de vibration selon l'une quelconque des revendications 11 à 14, dans lequel l'élément de support (34) comprend une pluralité de parties séparées par des plans s'étendant axialement au travers d'un trou central de l'élément annulaire.
